# EUROPEAN PATENT APPLICATION

(11) **EP 1 790 918 A1**
(43) Date of publication of application: **30.05.2007**
(21) Application number: 04727186.1
(22) Date of filing: 14.04.2004
(51) Int. Cl.: F24J 2/42

(54) **METHOD FOR PRODUCING SOLAR POWER**

(71) Applicant: CLOSED JOINT-STOCK COMPANY "MGK" "INTERGELIOECOGALAXY", Moscow, 107996 (RU)
(72) Inventor: CHABANOV, Alim Ivanovich, Alushta, 98517 (UA); SOBOLEV, Valerian Markovich, Moskovskaya obl., 141061 (RU); SOLOVJEV, Alexandr Alexeevich, Moscow, 119899 (RU); CHABANOV, Vladislav Alimovich, Moscow, 119517 (RU); KOROLEV, Vladislav Mihaylovich, Moscow, 129327 (RU); CHEPASOV, Alexandr Alexandrovich, Novosibirsk, 630099 (RU); SEVASTJANOV, Vladimir Petrovich, Novosibirsk, 630099 (RU); CHABANOV, Dmitrii Alexeevich, Novosibirsk, 630099 (RU); OTMAHOV, Leonid Fedorovich, Novosibirsk, 630057 (RU); GUNYA, Mihail Arsentjevich, Novosibirsk, 630132 (RU); ZHIGAJLO, Viktor Nikiforovich, Moscow, 117418 (RU); VORONKOV, Alexei Alexeevich, Moscow, 117042 (RU); FILIPENKO, Evgenii Semenovich, Simferopol, 95000 (UA); SMARZH, Ivan Iljich, Simferopol, 95011 (UA); BAKAEV, Farid Anvarovich, Cherkasy, 18024 (UA); MATASOV, Rev Alexandrovich, Cherkasy, 18024 (UA); EROCHOV, Nikolai Michailovich, Minsk, 220004 (BY); SIDORENKO, Jurii Petrovich, Minsk, 220071 (BY); SYCHEV, Michail Parfenovich, Minsk, 220002 (BY); SCHUKIN, Georgii Lukich, Minsk 220017 (BY)
(74) Representative: Turini, Laura
(86) International application number: PCT/BY2004/000015
(87) International publication number: WO 2005/100878

(57) **Abstract**

The invention concerns to helio-wind energy producing, to be exact - to ways of transformation of a solar energy in mechanical and electric energy in helio-energy electrogenerating complexes. The way is based on transformation of a solar energy to thermal energy by means of which rotary movement of air is created, before its receipt in wind-turbo generator of a helio-energy complex where for this purpose are formed the toroidal air channels located in parallel from each other and connected consistently relative to movement of energy saturated an air stream. In each of such channels the group of local inclined surfaces to which operated thermal flows of the technological working-medium acting from converters of a solar energy of a various kind and a potential level are brought, and also from its thermal accumulators is established. Besides in them can act and direct solar radiation. As a result of it in formed toroidal air channels is created significant temperature heterogeneity which leads to steady rotating airflows as lengthways of toroidal air channels, and in their cross-section and near-surface regions, with formation of turbulent, vortical movements. In toroidal air channels the rotating airflow repeatedly passes above inclined air-directing and thermo-generating surfaces, and its power saturation, including kinetic energy, accrues with each turn around of a vertical axis of the wind turbine and a chimney. The rotating whirlwind air flow consistently passes all toroidal air channels and, passing significant distance as a result of such movement, has time to get eventually design a preset value of kinetic energy which can provide manufacture of the electric power of the big capacity. The air flow, having passed all toroidal air channels, moves on an input of the wind turbine through energetically active, for example, screw surfaces on which thin jets or microparticles of water and-or steam by means of, in particular, atomizers in addition move. On surfaces of blades of the wind turbine the field of micro-holes is formed. By means of hit on the blade of microparticles of water there are microwhirlwinds as microparticles of water are exposed to process of micro-cavitations. It increases capacity of power transformation and does not lead to cavitational destructions of blades. A number of other technological receptions raising technical and economic efficiency of a way are used also. The way allows to create highly effective helio-energy installations which are capable to compete to the traditional thermal power stations working on the basis of burning of hydrocarbonic raw material.

## Description

### Technical Field

The present offered invention concerns to sphere of creation of energy installations on the basis of use of a solar energy.

### Background art

The way of transformation of energy of solar rays and a natural wind, as one of concrete displays of a solar energy in an environment, in the electric energy, based on a principle of absorption of solar rays for a dark surface, heating of air contacting to a dark surface and his direction in a chimney through the wind turbine, jointed with the electrogenerator (see certificate of authorship of the USSR 1415745 « Power installation » F 9/00, published 15.08.88 .)

Lack of the given way is small efficiency of use of principles and constructive decisions by means of which the way is realized. In the given technical decision apply practically laminar rectilinear movement of a working-medium - air from an environment through the helio-transforming space containing a dark surface and a transparent thermo insulating covering, in the wind turbine. Such movement of the airflow does not allow carrying out his significant power saturation up to an input in the wind turbine and to give to it the characteristics well interfaced to process of transformation of energy of the airflow in mechanical energy of rotary movement of the wind turbine.

The way of transformation of the solar energy, stated in the French application «The Collector of a solar energy of the raised efficiency » (see 2698682 F247 2/16, 2/20, 2/48, published 03.06.94 .), using absorption of solar rays by a dark surface is known, having heated air contacting to a dark surface - air-penetrable helio-absorbent a material, and his further direction through the wind turbine. The given technical decision in the design is more effective, than previous, in connection with the important application of an air-penetrable helio-absorbent material. However and in this case principles of an intensification of a moving airflow are not used, potential opportunities of an air-penetrable helio-absorbent material for giving special dynamic properties moving to the airflow are not used at all.

The most known device in which such way of transformation of a solar energy in electric energy is used, it is wide discussing in the scientific and engineering public, the power station «Solar Chimeney», entered in operation in 1990 . nearby to the city of Manzanares in Spain which is name in Russian terminology «The Solar fireplace» (see, for example, Lysov V.F. «Aeroturbine power stations », "Energy", 1991 ., 6). Despite of the significant sizes of a solar collector (diameter 245 m, height 1-85 a) and chimneys (diameter 10 and height 195 ), the achieved capacity of installation has made only 36 kWt. On the basis of the achieved results in overwhelming majority of scientific and engineering estimations it is judged an inefficiency of a way of transformation of solar radiation by means of use heated up airflow, with a binding to known laws of thermodynamics.

However, in this case a substantiation of such negative conclusion referring to laws of thermodynamics are insolvent. First, in the given technical decision on use of such way there are the constructive lacks connected to weakness of a design of a solar collector in which it is not applied a air-penetrable helio-absorbent surface, means of steam formation, for example with application of cultivated plants and the water tanks, capable to give additional economic benefit are not applied within the framework of a hothouse complex alongside with increase of intensity of power saturation of an air stream. Besides the approach to a design of a chimney appeared conservative, leading to its rather high cost, alongside with a lot of other constructive lacks. Second, in the given technical decision principles of rotary movement of air weight and vortex formation also are not carried out, and it was possible and possible to carry out easily now, meaning scale circular forms of the created solar collector. In particular, is easy to give rotary circular movement moving to radial airflow and to achieve escalating speed of rotary movement of air before his input in the turbine and chimney. Besides would be to create expediently purposefully thermal heterogeneity helio-absorbent surfaces, and due to it to bring to an air stream in additional rotary and vortical processes that allows informing a moving airflow incomparably greater energy potential. In connection with such analysis slightly opening essence of the technical decision offered by authors, the power station nearby to the city of Manzanares in Spain can serve still as the prototype for the modernized highly effective installations.

The principle of possible application of rotary vortical movements of air for solar power stations is known in theoretical development and some attempts of practical realization (see, for example: Solovev A.A., Soloduhin A.D. «The convection whirlwind-converter of a solar energy» Notes of Academy of sciences of Belarusian Soviet Socialist Republic , sulfurs. phys. energy sciences, 1989, 1). Theoretical researches show, that significant opportunities for escalating efficiency of transformation of a solar energy in mechanical if the certain conditions for control of turbulence of airflow as working body in transformation of a solar energy are successfully created take place.

The project large-scale a gravity - thermal power station is offered by V.V.Kushinym (see, for example: Kushin V.V. "Tornados" ., "Energoatomizdat", 1993.). However, this offer has first of all theoretical character as does not state a way of realization, suitable for real engineering and economic conditions.

In view of stated and the developed theoretical bases of vortex formation in the power airflows, the most close technical decision to offered according to the invention is the way of reception of mechanical energy in which processes with artificial generation of rotating stream (see Pommer L.A. " Power Generator Utilizing Elevation-Temperature Differential » operate. The patent of the USA 4187686 U F03G7/04, publ. in 1977). In a basis of its realization there is vertically located cylinder closed from above and from below. In a cylinder-pipe, according to the specified prototype, there are rotating streams of ascending warm air (and descending cold, as in a classical vortical tube). Though vortical flows contain a large energy potential, a leaving of heated up vortical airflow from the closed pipe through corresponding channels is connected to significant losses of his kinetic energy. And it is, alongside with other lacks, the most important lack of the named prototype.

Therefore a problem of the present technical decision, according to the prospective invention, creation of a way of transformation of a solar energy is on the basis of reception, by means of its thermal display, rotate-forward vortical movement of the air environment with high kinetic energy on an input in wind turbine, and the input of a vortical rotating airflow should be directed to an internal cavity of the wind turbine under an optimum corner, in particular, close to direct, is relative air-inlet surfaces of blades when kinetic energy of an airflow will be transformed to mechanical energy of rotary movement of the wind turbine with the minimal losses. Thus in a created way the technical decision at which the airflow, during accumulation in it kinetic energy, could be under thermal multivariate influence during enough long time up to an input in wind turbine, that practically unrealized should be found at a vertical arrangement of a pipe of the limited extent in which there is a process of accumulation of his kinetic energy according to the named prototype.

### Disclosure of invention

These problems in the offered way, according to the prospective invention, have found the variant of the decision.

Technical result of the prospective invention is increase of efficiency of transformation of energy of solar rays in mechanical energy, increase of economic efficiency and achievement of significant capacities industrial helio-energy installations.

The private technical results of the prospective invention, creating technical and economic conditions for maintenance of wide construction similar helio-energy complexes (plants) in the state scales, are the decreasing the level of capital outlays per unit of power in comparison with hydroelectric power stations and the atomic power stations, creation of conditions for use of big area of solar collectors, with the purpose of cultivation of cultivated plants in hothouse environments, for recycling the thermal losses arising in adjacent technological processes, and also decrease sound influences of the helio-energy complexes on an environment and others.

The specified technical result at realization of the invention is reached by that concerning known ways of transformation of a solar energy in the mechanical energy, the solar rays based on absorption by dark surfaces of firm bodies and the liquid environments separated from surrounding space by a transparent and thermo insulated material, and heating of a layer of air taking place under it and connected to surrounding space through of air-inlet means in this connection sites of the specified air layer get focused movement due to convective process which display amplifies on local technological sites means of vortex formation in it, and form the directed airflows from air-inlet means through a wind turbine and a chimney that allows to work-out of mechanical energy of rotary movement in the wind turbine, there are differences that with the help of thermal energy formed, mainly, at thermal transformation of solar rays, the named layer of air covered a transparent and-or thermo insulating material, around of a vertical axis due to formation in it of technologically consecutive horizontal air ring channels is resulted in continuous accelerated rotation, in particular, the toroidal forms, modelling energetically active air lines of the controlled length, and during each revolution of an air layer in his consecutive compound sites of the ring form, by means of overlapping in it of periodic pulse thermal influence and smooth temperature gradients, escalating speed and energy of his rotary movement with special formation of steady processes of vortex formation is carried out by accommodation in space of his rotation the inclined air-directing surfaces which are taking place under controlled multivariate thermal influence, which are located on the fixed distances from each other and contain a complex of constructive elements, including sites of surfaces of bodies of the rotation determining the most effective conditions for occurrence and maintenance of rotary-vortical movement, with application the additional wind-directing surfaces which are carrying out, in particular, functions of the bottoms and airceilings of the specified channels, thus from created rotating vortex-inclusive airflow the part of its filled volume and the saved up energy is taken away during each revolution around of a vertical axis and goes to an entrance cavity of the turbine under an optimum corner, in particular, close to direct, is relative wind-inlet surfaces of its blades with the help of interfacing aerodynamic devices, and further, with preservation of a principle of rotary-vortical movement of an airflow- in a chimney, thus controlled thermal influence on inclined airdirecting surfaces, providing generation artificial rotating of vortex-inclusive airflow, it is carried out by a part due to the direct solar radiation acting through a transparent thermo insulating material, and other part - due to a controlled supply to them of flows of a technological working-medium from thermal converters and accumulators of a solar energy of the various physical nature, and transformation before the saved up solar energy in thermal flows of a working-medium is carried out mainly outside a named transparent and-or thermo insulating material.

Such technical decision, according to the prospective invention, allows through the air-inlet means supplied, for example, with an air-penetrable material with focused under corresponding corner to radial directions of a translucent or not transparent thermo insulated collector by air-conducting interstices or through passage channels, to direct and twist air or a near-ground natural wind in first of the named consecutive compound sites - the air channels of the ring form covering in common a layer of air, moving helio-absorbent (in particular) and air-directing surfaces, including inclined, with adjustable temperature. The airflow which has received initial speed of rotation around of an axis of a chimney and wind turbine, acts on the inclined air-directing surfaces which are taking place under controlled thermal influence, and gets an increment of speed of movement, first of all, - its tangential (rotary) components.

Gradually accelerated airflow rises on the top level of the air ring channel where its energy is already essentially raised. From this level the part of a rotating airflow acts through corresponding apertures in technologically following ring channel located in parallel first on certain distance on height from a floor (bottom), or from a surface of ground where also are located similar or functionally similar inclined air-directing surfaces, with controlled multivariate formation of temperature on them, and diameter of rotating airflow in it can have smaller size, than in the previous case, or remain the former size. The quantity of an airflow, with the certain volume and energy which acts from the previous ring channel in the subsequent, is adjusted by corresponding automatic devices which variants of execution are a subject of separate technical decisions. In particular, air ring channels can settle down one above another, forming a vertical modular design under the wind turbine.

In connection with unstationary thermal influence of pulse character on a rotating airflow, and also due to creation of smooth temperature gradients in his cross-section and longitudinal sections which principle of realization will be explained below, in it there are steady accompanying processes of vortex formation. Forms and an arrangement of axes of these whirlwinds are defined by the created thermodynamic characteristics of the air ring channel, including forms and structure inclined air-directing surfaces, their temperature gradients and distances between them. For example, the last can be carried out in the form of the bottoms and ceilings of the specified channels, the cylindrical and conic surfaces containing auxiliary turbulent aerodynamic devices. One of the most important technological purposes of created trajectories of movement of airflow in air ring sites - from air-inlet means up to the interfacing aerodynamic devices located before the wind turbine with a vertical axis, - is creation of rotation of airflows concerning an axis of the turbine and in planes, perpendicular to surfaces of air ring channels. In this case the accelerated airflow gets a rotary-forward vortical trajectory of movement, passing through the wind turbine and the air-outlet the channel.
In connection with creation in the air layer under the transparent and-or thermo insulating material of high-speed movements of air and at the same time expediency of use of surfaces of the big areas of the first (bottom) channel for hothouse cultivation of cultivated plants, arises necessity of isolation of the last from created windflows, for example, due to formation windceilings.

From above-stated the technical decision, according to the prospective invention follows, that, has also other differences, except for named above.

In particular, difference will consist also that technological surfaces are created by means of a transparent and-or thermo insulating material, for example, close to cylindrical, prismatic or the pyramidal form, the set height, covering an axis of a chimney and wind turbine, and densely connecting them from above and from below surfaces, for example, as flat rings, the bottoms and ceilings of channels which form in common the air-directing surfaces located in parallel to each other and with the increasing height of their accommodation from periphery to wind turbine, and also establish also inclined under various corners wind-directing thermogenerating surfaces which values of temperature are set and adjusted created due to application of various forms of transformation and accumulation of a solar energy by power flows of a technological working-medium of various thermal intensity. Thus for reception of the last, equal or exceeding 4° , various kinds of the exothermal equipment, installation the independent solar hothouse complexes covered a transparent and thermo insulating material, the open reservoirs containing water with natural temperature are applied to recycling the vegetative and food waste products formed in an environment, and household waste products as products of ability to live in it which in common allow to create a spectrum of streams of a technological working-medium of various thermal and-or temperature intensity, for example. Increase of temperature intensity inclined air-directing surfaces therefore speed of rotation of airflow consistently accrues from periphery to the interfacing aerodynamic devices located before the wind turbine is made consecutive, from one ring of the air channel to another, thus on corresponding thermogenerating inclined air-directing surfaces and-or near to them move the heated up mixes of water, pair and an auxiliary airflow by means of what the mode effective auxiliary steaming is carried out, promoting acceleration of power saturation rotary-forward an vortex-inclusive airflow in the created air ring channels.

Besides there are differences and that interfacing aerodynamic devices are created by means of application inclined and the air-directing surfaces smoothly joined among themselves in such a manner that their superposition forms determined by technological variants of air-accelerating and wind-directing surfaces, for example, as conic narrowed screw, mainly discrete, thermo-aerodynamic surfaces, including with reduction of a corner of their rise along a vertical axis in process of approach of sites of the air channel an entrance cavity of the wind turbine, and screw thermo-aerodynamic surfaces are separated from external surrounding space by means of air-tight thermo-insulating designs with application of materials and the structures forming internal aerodynamic surfaces on conditions of minimization of force of friction moving to wind turbine of high-speed, its axis rotating around, airflow, thus to the external power streams brought to thermo-aerodynamic screw surfaces, the maximal potential level is informed and to them the mix formed in special technological installation due to that by means of active auxiliary steam formation finishing rotary-progress of an airflow is accelerated moves steam-water-air and, in particular, hit of microparticles of water on air-inlet surfaces of blades of the wind turbine due to that at corresponding high-speed modes are raised on them a field of microwhirlwinds and quasi-cavitations processes in them is provided.

### Brief description of drawings

For the explanatory of the technical decisions revealing essence of the prospective invention, the following illustrations are resulted:
On fig 1 the elementary diagram of transformation of a solar energy in mechanical energy, as initial base for additional installation of the devices providing consecutive increase of efficiency of a way according to the prospective invention is resulted.
On fig 2 the elementary diagram of a thermo-aerodynamic turbulence of an air stream by means of which acceleration of movement of air is reached, creation of accelerated rotation of an airflow around of an axis of a chimney and wind turbine and the vortical flows promoting power saturation of an air stream is resulted.
On fig 3 the variant of the scheme for the explanatory of process of power saturation of an air stream is resulted.
On fig 4 the variant of realization of a principle of consecutive transfer of rotary movement of airflow from one air ring channel to another and his submissions on an input of the wind turbine is shown.

### Best mode to carry out the invention

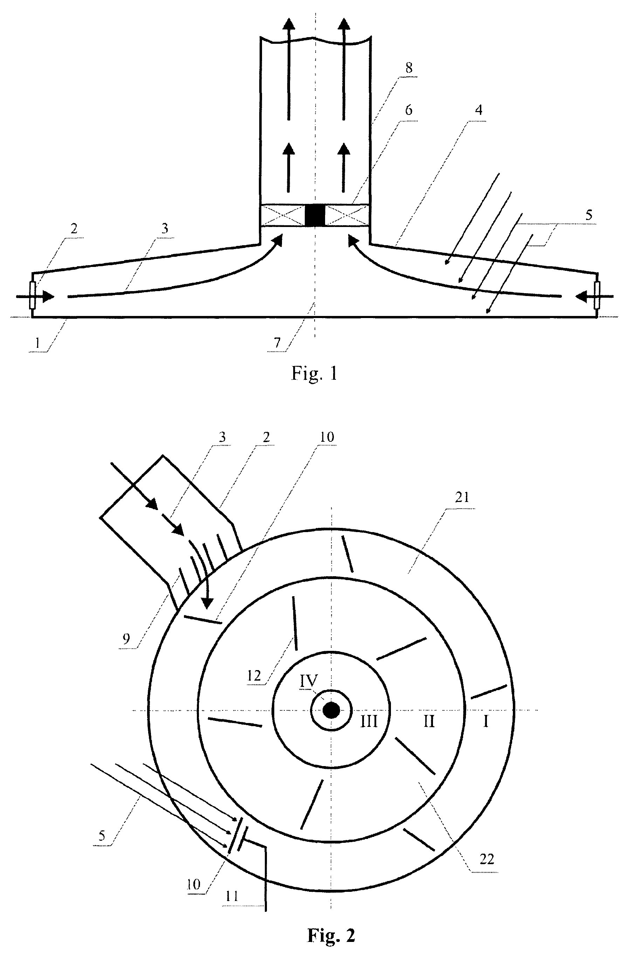

The helio-absorbent surface 1 (fig 1) is flowed round in converging radial directions through air-inlet means 2 by airflow 3 acting from surrounding space in an internal cavity of a solar collector, formed a transparent thermo insulating material 4 and a helio-absorbent surface. The internal cavity of a solar collector contains a layer of air 3 which carries out functions of the basic working-medium during transformation of energy of solar rays 5 in mechanical energy of rotary movement of blades of the wind turbine 6. The helio-absorbent surface 1 can consist of external and internal components, which on fig. 1 are not shown. The external (preparatory) part of helio-absorbent surfaces 1 can include ground cultivated sites, tanks with water, dark surfaces of firm bodies which can settle down at various levels on height and on various radial distances from an axis 7 of a chimney 8, have the various local, technologically proved forms, and also on it can be placed thermo generating - exothermal sites of manufactures, in particular, on a batch of bread, hot conservation of food stuffs, processing of dust and household waste products and others. In this case the natural wind in this zone undergoes preparation up to an input in apertures 2.

Solar rays 5, acting on helio-absorbent surfaces 1 through a transparent thermo insulating material 4, will be transformed to thermal energy and heat up a layer of air 3.

Due to convection process the heated up layer of air gradually rises upwards and leaves through additional devices which on figs 1 are not shown, and through the wind turbine 6 in upper layers of an atmosphere above a chimney, filling the volume ground surrounding space through air-inlet means 2.

If helio-absorbent surfaces 1 are executed so, that heating of air in a solar collector is carried out in regular intervals enough in real conditions of solar radiation the airflow moves ahead through air-inlet means, an internal cavity of a solar collector and chimney under laws of laminar current. In this case arising draft in a chimney and an atmosphere above a pipe is minimal, as well as speed of an air radial flow in an internal cavity of a solar collector because considered convection process notable for inertness. The last characterizes itself only initial stage of realization of a way. At such organization of airflows the area of helio-absorbent surfaces, the sizes of a solar collector and height of a chimney at the set designed capacity helio-energy installations should be considerably increased.

If the helio-absorbent surface 1 is executed in such a manner that heating of air under a transparent and heat insulating material in natural and artificial forms is characterized by significant heterogeneity, with significant gradients of temperatures in a layer of moving air, from air-inlet means to the wind turbine, there are turbulent rotary movements, vortical streams. The last can, practically completely, to liquidate the inertness of heat transfers in the moving air environment that is rather important positive factor raising efficiency of a way according to the prospective invention. Intensive temperature saturation by solar rays moving in wind turbine air nevertheless is not a sufficient condition for quite satisfactory increase in efficiency of transformation of a solar energy in mechanical as the temperature taking place through the wind turbine air renders only indirect influence on size of the efforts working on its blade. In a basis of the technical decision, according to the prospective invention, necessity of transformation, with the minimal losses, temperatures of helio-absorbent surfaces (more generally - the heated up surfaces) in high-speed rotating airflow, directed on the blade of the wind turbine under a corner close to direct (under an optimum corner is put, in view of processes of reflection of airflow from an escaping surface of the blade). Acceleration rotating of airflow also appreciably is promoted by vortical streams correctly organized in it, including for the wind turbine.

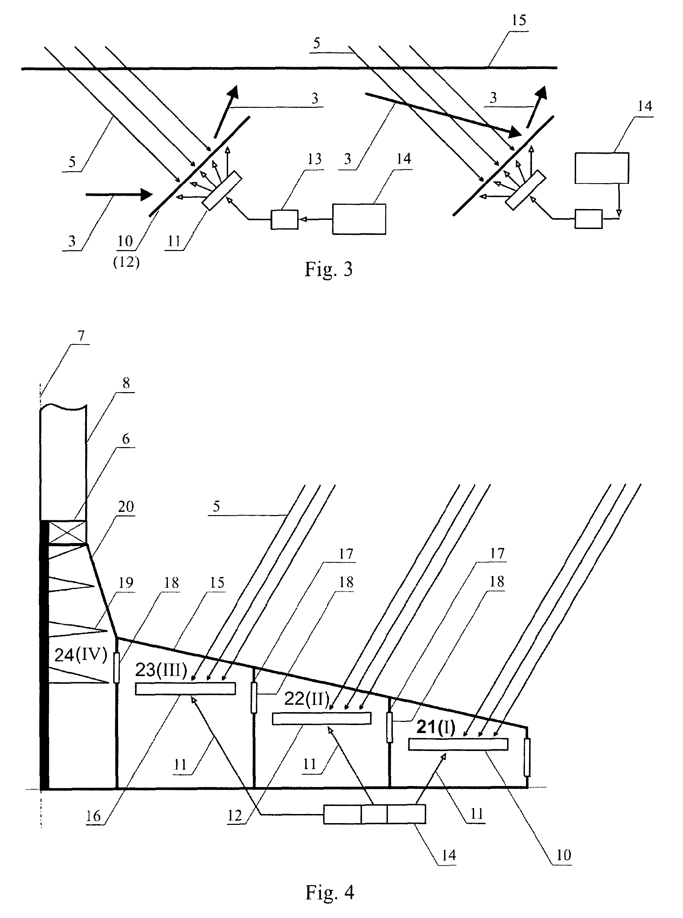

On figs 2,3, according to such concept, some system technical decisions, technological schemes and means which provide creation of steady reproached rotary movements of an airflow and vortex formations in them are submitted. By means of the offered technological schemes and means the opportunity to carry out in the set coordinates of a layer of air, as working-medium of energy-transforming, his rotary and vortical movements with the set orientation of axes of rotation is reached. As the wind turbine in a considered case has a vertical axis of rotation the basic power movement of air should represent his horizontal rotary movement around of a vertical axis 7, with consecutive accumulation in it kinetic energy from a revolution to a revolution. Among local rotary movements, with significant angular speeds, - vortical movements - technological schemes and means allow to create, at least, three their types:
the whirlwinds arising in planes of basic rotating airflow (in parallel an axis of a chimney and wind turbine) which promote acceleration of movement of the last as it is carried out at flight of a bullet due to its rotation in a plane, to a perpendicular trajectory of flight;
the whirlwinds arising close to helio-absorbent or heat-transmitting surfaces, around of axes, perpendicular and parallel to them which promote acceleration of transformations of temperature of surfaces in an increment of speed of the basic air rotating stream and to decrease in forces of friction between them;
the whirlwinds arising at surfaces of a transparent and-or thermo insulating material or interfacing aerodynamic devices which provide decrease in factor of friction between moving streams of air and a material contacting to them.

Can be created and other vortical movements of air having the special technological purposes. Whirlwinds should be created as accompanying technological processes, and those whirlwinds, local streams which arise spontaneously and lead to power losses, should be suppressed.

Process of the organization of rotary-vortical movements of an airflow begins with passage of air 3 through air-inlet means 2 (figs 2), which are supplied with devices 9 for giving circular (initial rotary) movements of air. The given devices can be executed by means of plates from a flat rigid material which surfaces are located roughly under a corner 45° to radial directions. As air-inlet means 2 are placed on periphery of helio-absorbent surfaces (or its internal component) with intervals or is continuous, the air stream acts in a solar collector or the first ring channel from the various parties, and initial rotary movement of a layer of air on periphery concerning his floor, the bottom is created. Air-directing devices 9 can be placed and on the certain distances from periphery of a solar collector, is closer to the center of power transformation, depending on a design of a helio-absorbent surface and air-accelerating channels. If takes place the natural near-ground wind acting in air-inlet means 2 from certain spatial direction speed of initial rotary movement of air can be the essentially greater or even rather significant, demanding restriction.

Further the airflow 3 with initial speed of rotation acts on inclined air-directing surfaces 10 which are placed on the scheme (fig 2) on a circle in quantity 5 piece in virtually generated first air ring channel. All inclined air-directing surfaces generate thermal energy in an accumulating stream, due to partial influence on them of the solar rays 5 acting through a transparent thermo insulating material 4, and mainly
- to connection to them of power channels 11 who bring with the set temperature a technological working-medium (for example, air, water, industrial oil) from accumulators or sources of thermal energy received by means of solar radiation and its corresponding intermediate transformations outside of a transparent, thermo insulating material (on fig 2 this technological complex is not shown), and also exothermal auxiliary manufactures which also are not shown in connection with absence of necessity of disclosing of a design of helio-absorbent surface 1.

The rotating airflow 3, perceiving thermal influence from inclined air-directing surfaces, receives an increment of speed which vector develops from a vertical convective direction and components of movement along inclined air-directing surfaces 10, and also in view of a corner of reflection of airflow. Moving further, received acceleration, an airflow 3 is reflected (in the given variant of realization of a way) from the general windceiling which functions carries out a thermo insulating or heated up heat-conductive material, or from local, supplied, in particular, by curvilinear surfaces, windceilings, accordingly located above everyone inclined air-directing thermo generating surfaces 10, on a direction of movement of windflows. As a result of it the airflow 3, after passage above each such surface 10, can be focused is strictly horizontal or with the certain inclination upwards or downwards. Besides each of such surfaces 10 with the windceiling can be executed as cylindrical or conic surfaces, or contain in a composition elements of the various surfaces promoting occurrence and rotary vortical movement. Occurrence such rotary-vortical movement is promoted by the generated gradients of temperature on the specified surfaces 10, and also leading to them of jets of water under the certain corners or specially organized auxiliary flow of steam-water-air mixture and technologically set gradients of temperature along all air ring channel. Gradients of temperature on inclined air-directing surfaces in longitudinal and cross-section directions are created due to the task of the certain gradients of density of a power stream of one potential level brought to them and-or use of a technological working-medium of various potential levels, including from reservoirs at natural temperature (for example, for formation of a temperature level of the some windceilings, in particular, local).

Owing to application of similar technological schemes and means the air 3, acting through air-inlet means 2 and getting initial rotary movement, does a lot of revolutions above inclined air-directing and thermo generating surfaces 10 in one air ring channel or in several of them, receiving during each revolution a pulse and monotonous increase kinetic and thermal energy. In transient kinetic energy rotating a vortex-inclusive air stream for his each revolution accrues. When there comes the established rotary-vortical process, quantity acting in the ring channel (for each revolution of a windflow around of an axis 7) to energy is equal to quantity of removed energy (as his volume, speed and temperature) in other air ring channel, technologically the subsequent behind the first. In the second air ring channel also are placed functionally similar inclined air-directing, thermo generating surfaces 12. The last can differ from the surfaces 10 considered above, in geometrical parameters and forms, including corners of an inclination concerning the horizontal plane, special air-directing channels, in size of thermal energy brought to them, but their technological purpose is kept. They in the second air ring channel provide the further increase in a rotating air stream (around of an axis 7) kinetic energy.

On fig 3 process of power saturation of airflow 3 in the air ring channel by consecutive transition of an air stream from one inclined air-directing, thermo generating a surface 10 (12) to another is shown. Thus it is shown, that power channels of submission of a working-medium are attached to regulators of speeds 13 of the last, and through them - to thermoaccumulators or to other sources of thermal energy 14 which are located, basically, outside transparent and thermo insulating coverings 4. Thus the temperature mode of surfaces 10 (12), than, mainly, is set and adjusted together with their aerodynamic profiling modes of rotary and vortical movements of the airflow 3 are defined. On the resulted figures movement of air in vortical processes is not shown. In the resulted scheme of power saturation of an air stream repeated passage of air above surfaces 10 (12) and his reflection from wind-directing ceilings 15 (which can have temperature considerably lower, than temperature of rotating airflow) or from other local surfaces is illustrated.

Means of formation of gradients of temperature in longitudinal and cross-section directions of surfaces 10 (12) on graphic illustrations also are not shown. In one of variants of wind-directing surfaces 10 (12) can have at an entrance part the form conic crater with an inclined axis where the certain layer of a moving airflow goes and falls on a conic surface downwards, before the subsequent rise on the following sites of surfaces 10 (12).

If the wind-directing surface is under influence of a technological working-medium with the lowered temperature (for example, by means of the water brought from a natural reservoir) the airflow, coming in it, gets additional acceleration on an inclination downwards due to cooling temperature influence. Then it gets additional acceleration at movement aslant upwards on sites of surfaces 10 (12) with considerably raised temperature. If thus, for example, from the left party the temperature of its surface is smoothly reduced from top to down, and from the right party rises from below upwards, (the gradient of the temperature brought by cold and hot water) the air stream accelerated downwards-upwards receives and accelerated rotary movement thus is created, for example, counter-clockwise. In average and top parts of surfaces 10 (12) where the temperature is considerably raised, except for a similar mode can be created and a mode of auxiliary steam formation with acceleration of rise and a turbulence of counter-clockwise moving airflow. Simultaneous presence in moving airflow hot and cooled surfaces, as is known, promotes development in it to turbulence and vortex formations.

Variants of realization of longitudinal and cross-section gradients of temperature of surfaces of 10 (12) and their geometrical forms exists very much, therefore to stop on them in more detail, with illustrations, it is inexpedient with reference to a considered way. It is essentially important, that in a moving rotating airflow it is necessary to increase first of all kinetic energy, instead of temperature.

On figs 4 the scheme of consecutive thermodynamic acceleration of rotary movement of airflow with his technological transition from one, in particular, the horizontal air ring channel to another is shown (them it is shown three: I, II, III), and then-through the vertical channel IV on an input of the wind turbine 6 and further in a chimney 8. In each of channels I, II, III, in the given example, inclined air-directing and also thermo generating and in necessary cases cooling surfaces (10, 12, 16, and also cold inclined surfaces and windceilings) are established. The last can be established in each channel in one number, in necessary quantity, with an arrangement of these numbers at various levels on height, with various filling ring channels by thermo-aerodynamic devices. If high capacity of transformation of a solar energy in each air ring channel it can be established on several numbers of similar multicomponent surfaces 10, 12, 16 is required. Solar rays 5 and blocks of helio-thermoaccumulators and-or other sources of thermal energy 14, each of which can have various temperature levels, heat up inclined wind-directing surfaces 10,12,16, and the last become thermo-generating at various potential levels of thermal energy, with set temperature gradients on them.

By consideration of technological aspects on figs 2,3 it was specified, that air ring channels have virtual character. It means, that due to accommodation of surfaces 10, 12, 16, a choice of their form and temperature modes rotary movement of the air environment around of an axis 7 with technologically expedient processes of vortex formation in air ring channels who are not divided by material partitions is created. However at the certain capacity of transformation of a solar energy mutual influence by a number of moving airflows with various power characteristics starts to have an adverse effect, conditions for development of parasitic vortical processes are created. Therefore on figs 4 the principle of formation of air ring channels with the help of cylindrical surfaces 17 and windceilings 15 of a transparent and-or thermo insulating material is shown. Transition of a part of volume of the airflow from one channel (I, II, III, IV) in another during his each revolution is carried out by means of apertures 18 and of auxiliary devices, which on fig. 4 are not shown. Horizontal surfaces - "floors", insulating channels I, II, III, IV from below, also are not illustrated, but they are made - with application of transparent and-or thermo insulating materials. Configuration of channels can be multiple, in particular, channel I of a primary twisting of airflow can be carried out compactly in the center of a solar collector and to not contain transparent sites.

The channel IV contains a rising screw surface 19 which is executed due to installation with aerodynamic interface inclined wind-directing thermogenerating surfaces. Superposition of the last, including with application of apertures in structure of a discrete screw surface, allows to form moving vertically, along an axis 7, air rotating (around of this axis 7) the vortical flow acting in the wind turbine 6 and further - in a chimney 8.

The screw aerodynamic and thermodynamic surface 19 is separated from surrounding space by means of a thermo insulating hollow cone (or the truncated pyramid) 20 which internal surface, as well as the surface 19, is carried out from materials with giving of a special relief by that it provide significant decrease in power losses on friction.

Way, according to the prospective invention, the friend above the friend that promotes realization of the most favourable moving of airflow from the channel in the channel - on a vertical (with observance of the same principle shown on fig 4) can have concrete realization also with application of accommodation of channels I, II, III, IV vertically. Thus lateral surfaces of channels can be carried out equal cross-section sections, look like cylinders or many-sided prisms, pyramids with not transparent "bottoms" and "ceilings", etc.

On fig. 4 to channels I, II, III, IV is given additional numbers (21, 22, 23, 24).

The device realizing the offered way of transformation of a solar energy, submitted, in one of possible variants, in the simplified presentation on figs. 1, 2, 3, 4, works as follows.

The helio-absorbent surface 1 as a ground surface, in particular, with cultivated plants, is added with dark surfaces, in particular, 10, 12, 16, the formed by plates, including flat, executed of steel sheets. These surfaces the first circle settle down on the ground basis under a corner 45° to a horizontal plane and are heated up under action in part, the solar radiation (rays) 5 which are taking place through a transparent material 4, and mainly - by a supply to them of power channels through whom the heated up working-medium as which it is applied, for example, water, moves.

The working-medium, proceeding through heat-conducting channels, for example, metal pipes, in particular, attached to the steel sheets forming surfaces 10, 12, 16, creates technologically set temperature gradients lengthways and, in particular, across a taking place airflow. The specified metal pipes and their possible fastening concerning surfaces 10, 12, 16 on graphic illustrations are not shown (these vortex-making surface can form and trumpet radiators).

Air 3 through air-inlet means 2 acts under a transparent thermo insulating material 4 representing, for example, a polymeric film, connected with more powerful building basis, in the most various thermo insulating variants, under a corner to radial directions so that it received initial rotary movement around of an axis 7 of a chimney 8 and wind turbine 6. It is reached due to accommodation in air-inlet means 2 of flat metal plates 9 under a corner 45 ° concerning radial directions from periphery to an axis 7. In the given concrete device are applied five of inclined wind-directing surfaces 10, and the established, at least, five air-inlet means 2 placed on a circle concerning an axis 7.

Air during initial rotary movement, acts on inclined wind-directing and thermo generating surfaces 10, rises on them and receives the further increment of speed. The airflow accelerated thus moving under a corner to a horizontal plane, reaches a wind-directing ceiling 15 (figs 3) and is reflected on an initial level, to an input on the following surface 10. This process repeats repeatedly, and the formed airflow does some revolutions around of an axis 7 above surfaces 10. As a result of it in the formed air ring channel 1 (fig. 4) gets technologically set size of kinetic energy which part during each revolution is transferred as volume and speed of airflow in the following air channel II in which similar surfaces 12 at higher level along a vertical axis 7 are placed. In other variants of realization of the offered way process of accumulation of kinetic energy of moving airflow can have other constructive performance, but same components making it. Therefore there is no necessity to open their realization.

The temperature gradient created in a cross-section direction on surfaces 10 due to distribution of specific density of the heated up flow of a working-medium creates conditions for occurrence of vortical air movement in planes, perpendicular to a direction of movement of an airflow around of an axis 7. This vortical movement accelerates process of energy saturation of rotating airflow around of an axis 7 and makes out vectorially his cross-section in the general air environment under a transparent and-or thermo insulating material 4.

Technological processes similar on criterion functions, with the certain specificity, occur in channels II, III (figs 2, 3, 4) in which it is consecutive, from the channel to the channel, power saturation of an airflow, including his kinetic energy and temperature accrues.

On fig 4 is shown, that the part of a rotating airflow passes (during each revolution) from the previous air ring channel in the subsequent (21, 22, 23, 24) through apertures 18 in cylindrical air-directing walls 17. The last designate constructive borders of channels 21, 22, 23 (I, II, III) and to them are attached airceilings 15 and the bottoms of channels (these bottoms not figures are not shown). In other constructive variants apertures 18 can be carried out in "ceilings", "bottoms" of each of ring channels, and also to have more complex form corresponding to crossing of surfaces of bodies of rotation, including a slot-hole design - for promotion of air from below upwards.

Walls, airceilings and the bottoms in channels I, II, III are executed, for example, by means of pipes with the heat-carrier, a polymeric film or the thin strengthened glass, the metal sheets connected with a strong thermo insulated building basis. Walls, air ceilings and the bottoms can be carried out, in particular, in the spherical form, and in that case created surfaces of air ring channels can form hollow toroids with controlled apertures 18 between them, thus inside hollow toroids there is an accumulation of kinetic energy of rotating airflows for what the toroidal surface of ring channels can be connected to thermodynamic inclined surfaces in a uniform design.

For example, inclined wind-directing thermo-generating surfaces 12, 16, lifted above an ground surface on basic racks, can be carried out by means of a composition of surfaces of bodies of rotation and be built as components of surfaces of toroidal air channels II, III. On their internal surfaces it can be created, except for a gradient of temperature, also a relief promoting vortex formation in a cross-section direction and above them, that is to creation of the microwhirlwinds lowering losses on friction and accelerating processes of a heat transfer. Surfaces of some or all ring channels I-IV (21, 22, 23, 24) can be carried out and lightproof, with stationary thermo insulation or with demountable, or its automatically adjustable sites.

On fig 4 process of transition of airflow from the horizontal channel III in the vertical channel IV adjoining in the top part to an input in the wind turbine 6, in which is submitted take place, mainly, horizontal rotary-vortical and vertical forward, also containing vortical formations, movements of an airflow.

Inside the power air channel IV the screw surface 19 rising along an axis 7 with corner decreasing up of rise, in particular, mainly, in a discrete design is placed..

The screw surface 19 is thermally separated from external surrounding space by the conic or pyramidal surface 20 formed by a thermo insulated metal cone or truncated by a many-sided pyramid, with the minimized resistance to movement of an air stream.

Adjustable quantity of rotating airflow and, hence, his energy act from the channel III in the channel IV by means of apertures of 18 and controlled transmitting devices (with functional purpose such as an accelerator) which graphically are not illustrated. On position of these devices, at the set selection of capacity in the turbine, essential influences have concrete conditions of draft in a chimney 8. The volume of rotating air which is taken away from the channel III in the wind turbine 6, automatically adjusting process is transferred through channels II, I up to air-inlet means 2 which also are supplied with means of regulation of submission of air (on a case of change of parameters of a natural wind, including his raised speed), that also is not illustrated.

For increase in speed of rotation and rise of an airflow along a thermo-aerodynamic screw surface 19, on last, in particular, by means of atomizers fine jets or drops of the heated up water and-or specially generated mix pair, microparticles of water and hot air due to that the mode of auxiliary steam formation and an increment of energy of movement of airflow the raised intensity is created move. On air-receiving wind turbines 6 the field of carters by diameter about 2 mm and depth of 1 mm is put to a surface of blades, in particular, that graphically also are not illustrated. It results, due to the created mode of high-speed airflow, to formation on surfaces of blades of the wind turbine fields of microwhirlwinds. The particles of water getting in such microwhirlwinds with airflow appear in a mode of micro-cavitations, and with the help of quasi-cavitations process transfer of energy of airflow to wind turbine increases. Such mode does not lead to cavitations damages of blades of the wind turbine.

Above-stated confirms an opportunity of realization of the offered technical decision, according to the prospective invention. Variants on realization of the offered way exists much.

Technical and economic efficiency of the offered way is reached at realization of item 1 of the claims of the invention, however realization of all items of the claims allows to raise essentially efficiency of transformation of a solar energy in mechanical and electric.

## Claims

1. Way of transformation of the solar energy, based on absorption of solar rays by dark surfaces of firm bodies and the liquid environments separated from surrounding space by a transparent and thermo-insulating material, and heating of a layer of air taking place under it and connected to surrounding space through air-inlet means, so that sites of the specified air layer get focused movement with the help of process of convection which display amplifies on local technological parts means of vortex formation in it, and form the directed airflow from air-outlet means through the wind turbine and a chimney that allows to make working out of mechanical energy of rotary movement in the wind turbine, **characterized in that** with the help of thermal energy formed, mainly, at thermal transformation of solar rays, the named layer of air covered transparent and-or thermo-insulated with a material, around of a vertical axis due to formation in it of technologically consecutive horizontal air ring channels is resulted in continuous accelerated rotation, in particular, the torodial forms, modelling energetically active air lines of the controlled length, and during each revolution of an air layer in his consecutive compound sites of the ring form, by means of overlapping in it of periodic pulse thermal influence and smooth temperature gradients, escalating speed and energy of his rotary movement with the aim of formation of steady processes vortex-making is carried out by accommodation in space of his rotation the inclined air-directing surfaces which are taking place under controlled multivariate thermal influence, located, mainly, on the fixed distances from each other and constructive elements containing a complex, including sites of surfaces of bodies of the rotation determining the most effective conditions for occurrence and maintenance of round-vortical movement, with application of the additional air-directing surfaces which are carrying out, in particular, functions of local airceilings, thus from created rotating vortex-inclusive airflow the part of his filled volume and the saved up energy is taken away during each revolution around of a vertical axis and goes to an entrance cavity of the wind turbine under an optimum corner, in particular, close to direct, is relative air-directing surfaces of its blades with the help of interfacing aerodynamic devices, and further, with preservation of a principle of round-vortical movement of an airflow, - in a chimney, thus controlled thermal influence on inclined air-directing surfaces, Providing generation artificial rotating of vortex-inclusive airflow, it is carried out, mainly, by a part due to the direct solar radiation acting through a transparent thermo insulated material, and other part - due to a controlled supply to them of flows of a technological working-medium from thermal converters and accumulators of a solar energy of the various physical nature, and transformation before the saved up solar energy in thermal flows of a working body is carried out mainly outside a named transparent and thermo insulated material.

2. Way of transformation of a solar energy as claimed in claim 1 **characterized in that** technological surfaces are created by means of transparent and-or a thermo insulating material, for example, close to the cylindrical form of the set height, covering an axis of a chimney and the wind turbine, and densely connecting them from above and from below surfaces, for example, as flat rings which form in common air-directing, in particular, transparent ceilings, walls and floors of the air ring channels located in parallel each other and with the increasing height of their accommodation from periphery of the wind turbine in which are established inclined air-directing and power flows of the set temperature level of a surface generating in the air environment which values are adjusted created, mainly, due to application of various forms of transformation and accumulation of a solar energy by power flows of a technological working-medium of various thermal intensity, thus for reception of the last, equal or exceeding 4° , various kinds of the exothermal equipment, installation the independent solar hothouse complexes covered with a transparent and thermo insulating material, the open reservoirs containing water with natural temperature are applied to recycling the vegetative and food waste products formed in an environment, and household waste products as products of ability to live in it which in common allow to create a spectrum of flows of a technological working-medium of the set thermal intensity, for example, thus increase of temperature intensity of inclined air-directing surfaces is made consecutive, from one air ring channel to another, Therefore speed of a air flow rotating consistently accrues from periphery to the interfacing aerodynamic devices located before the wind turbine, thus on corresponding thermo-generating inclined air-directing surfaces the heated up water and-or a steam-water-air mixture by means of what the mode of effective steam producing is carried out, promoting acceleration of power saturation rotating of an vortex-inclusive air flows in the created air ring channels moves.

3. A way of transformation of a solar energy as claimed in claim 1.2., **characterized in that** interfacing aerodynamic devices are created by means of application the inclined thermo-generating and air-directing surfaces placed among themselves in such a manner that their superposition forms determined by technological variants air-accelerating and wind-directing surfaces, for example, as conic narrowed screw, mainly discrete, thermo-aerodynamic surfaces, including with reduction of a corner of their rise along a vertical axis in process of approach of sites of the air channel an entrance cavity of the wind turbine, and screw thermo-aerodynamic surfaces are separated from surrounding space by means of external air-tight thermo-insulating designs conic and-or pyramid forms with application of materials and structures, Forming internal aerodynamic surfaces on conditions of minimization of force of friction moving in an entrance cavity of the wind turbine high-speed rotating around airflow, thus to the external power streams brought to thermo-aerodynamic screw surfaces, the maximal potential level is informed its axis and to them the mix formed in special technological installation due to that it is accelerated finishing round-progress of an airflow moves steam-water-air and, in particular, hit of microparticles of water on air-receipting surfaces of blades of the wind turbine due to what at corresponding high-speed modes are raised on them a field of microwhirlwinds and auxiliary quasi-cavitations processes is provided.
